(19) Europäisches Patentamt / European Patent Office / Office européen des brevets

(11) **EP 4 337 598 B1**

(12) **EUROPEAN PATENT SPECIFICATION**

(45) Date of publication and mention
of the grant of the patent:
**11.06.2025 Bulletin 2025/24**

(21) Application number: **21742232.8**

(22) Date of filing: **18.06.2021**

(51) International Patent Classification (IPC):
**C01B 3/04** *(2006.01)*      **B01D 53/047** *(2006.01)*
**B01D 53/86** *(2006.01)*      **B01D 53/94** *(2006.01)*
**C01B 3/56** *(2006.01)*

(52) Cooperative Patent Classification (CPC):
**C01B 3/047; B01D 53/8625; C01B 3/56;**
B01D 53/047; B01D 2251/2062; B01D 2255/1021;
B01D 2255/20707; B01D 2255/20723;
B01D 2255/20769; B01D 2255/20776;
B01D 2255/50

(86) International application number:
**PCT/US2021/037996**

(87) International publication number:
**WO 2022/265648 (22.12.2022 Gazette 2022/51)**

(54) **AMMONIA CRACKING FOR GREEN HYDROGEN WITH NOX REMOVAL**

AMMONIAKSPALTUNG FÜR GRÜNEN WASSERSTOFF MIT NOX-ENTFERNUNG

CRAQUAGE D'AMMONIAC POUR HYDROGÈNE VERT AVEC ÉLIMINATION DE NOX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.03.2024 Bulletin 2024/12**

(73) Proprietor: **Air Products and Chemicals, Inc.
Allentown, PA 18106 (US)**

(72) Inventors:
• **WHITE, Vincent
Allentown, PA 18195 (US)**

• **SALOWAY, Simon Craig
Allentown, PA 18195 (US)**

(74) Representative: **Beck Greener LLP
Fulwood House
12 Fulwood Place
London WC1V 6HR (GB)**

(56) References cited:
**WO-A1-2020/095467      CN-A- 111 957 270
US-A1- 2009 304 574      US-A1- 2020 032 689**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 337 598 B1

## EP 4 337 598 B1

**Description**

BACKGROUND

Global interest in renewable energy and using this renewable energy to generate green hydrogen has driven the interest in converting the green hydrogen to green ammonia, as ammonia is simpler to transport over distance of hundreds or thousands of miles. Particularly, shipping liquid hydrogen is not commercially possible currently but shipping ammonia, which is in a liquid state, is currently practiced.

For use in a commercial fuel cell, the ammonia must be converted back to hydrogen according to the reaction.

$$2NH_3 \rightleftharpoons 3H_2 + N_2$$

This is an endothermic process, i.e., a process that requires heat, and is performed over a catalyst. This process is known as cracking. The gas produced (or "cracked gas") is a combination of hydrogen ($H_2$) and nitrogen ($N_2$). Since the cracking reaction is an equilibrium reaction, there is also some residual ammonia. In most applications of crackers currently, the hydrogen + nitrogen mixture is utilised as is. However, as ammonia can be a poison to fuel cells, this stream, with ammonia suitably removed such as by scrubbing with water, can be used directly in a fuel cell. However, if the hydrogen is to be used in vehicle fueling, the nitrogen present provides a penalty to the process. The fuel to a vehicle fueling system is compressed to significant pressure - up to 900 bar. This means that the nitrogen, which is merely a diluent in the process, is also compressed, taking power, and taking storage volume and increasing anode gas purge requirement, decreasing efficiency. It is therefore beneficial where hydrogen is to be used in vehicle fueling, for the hydrogen + nitrogen to be purified.

Small scale cracking reactors, or "crackers", typically use pressure swing adsorption ("PSA") devices to separate the cracked gas and recover the hydrogen and generate a PSA tail gas (or offgas). However, these crackers are generally heated electrically, and the PSA tail gas is typically vented to atmosphere.

As is common in hydrogen production from a steam methane reforming (SMR) reactor, a PSA can be used to purify the nitrogen + hydrogen. The cracking reaction is performed in tubes packed with catalyst which are externally heated by a furnace (see GB1142941).

The heat required for the cracking reaction is typically provided by the combustion of one of more fuels in a furnace. Combustion of fuels, particularly hydrocarbon and ammonia containing fuels inevitably produces various air pollutants including oxides of nitrogen ($NO_x$). $NO_x$ is a generic term for mono-nitrogen oxides, namely NO and $NO_2$, which are produced during combustion of fuels at high temperatures. There is a need to control NOx emissions due to their adverse environmental and human health effects.

GB1142941 discloses a process for making town gas from ammonia. The ammonia is cracked and the cracked gas scrubbed with water to remove residual ammonia. The purified hydrogen/nitrogen mixture is then enriched with propane and/or butane vapor to produce the town gas for distribution.

US6835360A discloses an endothermic catalytic reaction apparatus for converting hydrocarbon feedstock and methanol to useful gases, such as hydrogen and carbon monoxide. The apparatus comprises a tubular endothermic catalytic reactor in combination with a radiant combustion chamber. The resultant cracked gas is used directly in a fuel cell after passing through a gas conditioning system.

GB977830A discloses a process for cracking ammonia to produce hydrogen. In this process, the hydrogen is separated from the nitrogen by passing the cracked gas through a bed of molecular sieves which adsorbs nitrogen. The nitrogen is then driven off the bed and may be stored in a holder.

JP5330802A discloses an ammonia cracking process in which the ammonia is contacted with an ammonia decomposition catalyst at a pressure of 10 kg/cm$^2$ (or about 9.8 bar) and a temperature of 300 to 700°C. Hydrogen is recovered from the cracked gas using a PSA device. The reference mentions that the desorbed nitrogen may be used to boost the upstream process but no details are provided.

US2007/178034A discloses a process in which a mixture of ammonia and hydrocarbon feedstock is passed through a fired steam reformer at 600°C and 3.2 MPa (or about 32 bar) where it is converted into a synthesis gas containing about 70 vol. % hydrogen. The synthesis gas is enriched in hydrogen in a shift reaction, cooled and condensate removed. The resultant gas is fed to a PSA system to generate a purified hydrogen product having 99 vol. % hydrogen or more. The offgas from the PSA system is fed as fuel to the fired steam reformer.

CN111957270A discloses a process in which ammonia is cracked in a tubular reactor within a furnace. The cracked gas is separated by adsorption to produce hydrogen gas and a nitrogen-rich offgas. The fuel demand of the furnace appears to be satisfied using a combination of cracked gas, hydrogen product gas and/or offgas.

There is a need generally for improved processes for the production of hydrogen from ammonia and specifically for processes that are more efficient in terms of energy consumption and/or that have higher levels of hydrogen recovery and/or that reduce or eliminate the need to combust fossil fuels and/or that reduce $NO_x$ emissions.

In the following discussion of embodiments of the present invention, the pressures given are absolute pressures unless otherwise stated.

BRIEF SUMMARY OF THE INVENTION

Described herein is a method and apparatus for producing hydrogen from ammonia. The present inventors have found that an aqueous ammonia solution can be recovered from the PSA offgas (tail gas) and can be used in a selective catalytic reduction (SCR) process to remove harmful $NO_x$ from flue gas.

According to first aspect of the invention, there is provided a method for producing hydrogen from ammonia, comprising:

pressurizing liquid ammonia to produce pressurized liquid ammonia;

heating (and optionally vaporizing) the pressurized liquid ammonia by heat exchange with one or more hot fluids to produce heated ammonia;

combusting a fuel in a furnace to heat catalyst-containing reactor tubes and to form a flue gas comprising oxides of nitrogen ($NO_x$);

contacting the flue gas with a selective reduction catalyst in the presence of ammonia in a selective catalytic reduction (SCR) reactor to convert $NO_x$ to nitrogen gas and water;

supplying the heated ammonia to the catalyst-containing reactor tubes to cause cracking of the ammonia into a cracked gas containing hydrogen gas, nitrogen gas and residual ammonia;

purifying the cracked gas in a first PSA device to produce a first hydrogen product gas and a first PSA tail gas comprising ammonia;

compressing at least a portion of the first PSA tail gas to produce compressed PSA tail gas;

cooling the compressed PSA tail gas to produce cooled ammonia-depleted tail gas and an aqueous ammonia solution; and

separating the cooled ammonia-depleted tail gas from the aqueous ammonia solution;

wherein the separated aqueous ammonia solution is fed to the SCR reactor to provide ammonia for the SCR reaction; and

wherein the one or more hot fluids comprise the flue gas and/or the cracked gas.

The liquid ammonia is typically pressurized to a pressure that is greater than 1.1 bar, e.g. at least 5 bar or at least 10 bar. In some embodiments, the liquid ammonia is pressurized to a pressure in a range from about 5 bar to about 50 bar, or in a range from about 10 to about 45 bar, or in a range from about 30 bar to about 40 bar.

The liquid ammonia is typically heated to produce heated ammonia at a temperature greater than about 250°C, e.g. in a range from about 350°C to about 800°C, or from about 400°C to about 600°C. At the pressures in question, the liquid ammonia is typically vaporized completely to form heated ammonia vapour.

The temperature is ultimately determined by the identity of the catalyst, the operating pressure, and the desired "slip", i.e. the amount of ammonia that passes through the cracking reactor without being cracked. In this regard, the process is typically operated with no more than about 4% slip which would be the amount of slip if the cracking process were operated 5 bar and 350°C with a close approach to equilibrium. Problems may arise with some construction materials at any appreciable pressure at temperatures above about 700°C.

The cracking reaction takes place in catalyst-filled reactor tubes that are heated by a furnace. However, in theory any heterogeneously catalysed gas reactor could potentially be used for the conversion.

There are many catalysts known in the art as useful for the ammonia cracking reaction and any of these conventional catalysts may be used in this invention.

The fuel for the furnace may comprise hydrogen, ammonia, cracked gas, a PSA offgas or methane but typically comprises methane. The fuel may be pure methane but is more likely natural gas or biogas. In some embodiments, the primary fuel is natural gas or biogas which is supplemented with hydrogen as a secondary fuel, optionally in the form of an ammonia cracked gas. In these embodiments, liquid ammonia may be pumped and cracked to form the cracked gas which is added to the primary fuel. In some embodiments, the fuel comprises the cooled ammonia-depleted tail gas, or a gas derived therefrom.

The first PSA device may operate a PSA cycle or a vacuum swing adsorption (VSA) cycle. A TSA device may be used in combination with the first PSA device, the TSA device to remove ammonia (see US10787367) and the first PSA device to remove nitrogen and produce the hydrogen product. Suitable PSA cycles include any of the cycles disclosed in US9381460, US6379431 and US8778051, the disclosures of which are incorporated herein by reference.

The compressed PSA tail gas is preferably cooled to facilitate the removal of water and ammonia. In this regard, the compressed gas is preferably cooled to a temperature in the range from about 5°C to about 60°C, or from about 10°C to about 60°C, preferably about 50°C. The skilled person would appreciate that the temperature is dependent on the pressure of the tail gas, which itself depends on the other pressures in the system, such as the cracker pressure and the PSA operating pressure.

The compressed PSA tail gas is typically cooled by heat exchange with at least one coolant selected from water, the cold feed ammonia and the one or more cooled fluids produced from heating the liquid ammonia.

Water may optionally be added to the compressed PSA tail gas to form the aqueous ammonia solution. In some embodiments, the feed ammonia may contain water, typically in amounts from about 0.1 wt. % to about 0.5 wt. %, e.g. about 0.2 wt. %. This water is present to prevent stress corrosion cracking in vessels during shipping and storage. However, water at these levels may, in some cases, need to be removed from the feed ammonia to prevent damage to the ammonia cracking catalyst. If water is present in the feed ammonia and does not need to be removed prior to cracking (i.e. if the catalyst is water-tolerant) then additional water may not be required.

The water may be chilled before adding to the compressed first PSA tail gas to a temperature below ambient temperature, e.g. about 25°C. In this regard, the chilled water may be at a temperature from about 5°C to about 25°C, e.g. from about 5°C to about 10°C.

The method may optionally comprise recycling the cooled ammonia-depleted tail gas to the first PSA device for purification with the cracked gas or the ammonia-depleted gas derived therefrom. In such embodiments, the ammonia-depleted tail gas may be compressed, and the compressed PSA tail gas recycled to the first PSA device. Recycling in this way can achieve an overall hydrogen recovery of about 94% to about 96%.

The method may optionally comprise purifying the cooled ammonia-depleted tail gas in a second PSA device to produce a second hydrogen product gas and a second PSA tail gas. In these embodiments, the second hydrogen product gas is combined with the first hydrogen product gas to produce a combined hydrogen product gas and the fuel combusted in the furnace may comprise the second PSA tail gas.

Further processing in this way can achieve an overall hydrogen recovery of about 95% to about 97%. For example, if the first PSA device achieves 83% recovery and the second PSA achieves 80% recovery, then the overall recovery is 96.6%.

The second PSA device may operate a PSA cycle or a vacuum swing adsorption (VSA) cycle. A TSA device may be used in combination with the second PSA device, the TSA device to remove ammonia (see US10787367) and the second PSA device to remove nitrogen and produce the hydrogen product. Suitable PSA cycles include any of the cycles disclosed in US9381460, US6379431 and US8778051.

The first PSA tail gas is typically compressed to the pressure of the feed to the first PSA device. The first PSA tail gas is typically pressurized to a pressure that is greater than about 1.1 bar, e.g. at least 5 bar or at least 10 bar. In some embodiments, the first PSA tail gas is pressurized to a pressure in a range from about 5 bar to about 50 bar, or in a range from about 10 to about 45 bar, or in a range from about 30 bar to about 40 bar.

A further portion of the first or second PSA tail gases, or a gas derived therefrom, can optionally be separated using a membrane separator to discharge a nitrogen-rich retentate gas and recycle a hydrogen-rich permeate gas for further processing in the PSA devices and/or for mixing into the hydrogen product gas.

Like hydrogen, ammonia is a "fast gas" that readily permeates across membranes used for gas separation. Some membranes, such as those constructed of polyamide or polysulfone polymers, are more tolerant of ammonia. However, some membranes, such as those constructed of polyimide polymers, are less tolerant of ammonia. Therefore, ammonia is typically removed, or its concentration is at least reduced, upstream of the membrane separator.

Ammonia removal may be achieved in several different locations within the process. Prior to separating the PSA tail gas, ammonia may be removed from the PSA tail gas. Alternatively, prior to purifying the cracked gas, ammonia may be removed from the cracked gas. In both cases, the removed ammonia may be recovered and recycled into the ammonia supplied to the catalyst-containing reactor tubes.

Ammonia may be removed from a gas by adsorption (e.g. by TSA) or by absorption in water, e.g. by washing the gas with water in a scrubber. The resultant ammonia-depleted gas and ammonia solution are separated so the ammonia-depleted gas can be further processed without the ammonia causing any difficulties. Ammonia can be recovered from the ammonia solution by stripping in a column. Such a process may be applied to the cracked gas prior to being supplied to the PSA unit or alternatively to the PSA tail gas prior to being supplied to the membrane separator.

The selective reduction catalyst may be any suitable catalyst known in the art. Typical selective reduction catalysts are oxides of titanium, vanadium, molybdenum or tungsten, or zeolites. Platinum or other precious metals may be used in certain processes such as lower temperature applications.

According to a second aspect of the invention, there is provided an apparatus for producing hydrogen from ammonia, comprising:

a pump for pressurizing liquid ammonia to produce pressurized liquid ammonia;

at least one first heat exchanger in fluid communication with the pump for heating (and optionally vaporizing) the pressurized liquid ammonia from the pump by heat exchange with one or more hot fluids;

catalyst-containing reactor tubes in fluid communication with the first heat exchanger(s), for cracking heated ammonia from the first heat exchanger(s) to produce a first cracked gas containing hydrogen gas, nitrogen gas and residual ammonia;

a furnace in thermal communication with the catalyst-containing reactor tubes for combustion of a fuel to heat the catalyst-containing reactor tubes and to form a flue gas comprising oxides of nitrogen ($NO_x$);

a first PSA device in fluid communication with the catalyst-containing reactor tubes for purifying the cracked gas to produce a first hydrogen product gas and a first PSA tail gas;

a compressor in fluid communication with the first PSA device for compressing at least a portion of the first PSA tail gas to produce compressed PSA tail gas;

at least one second heat exchanger in fluid communication with the compressor for cooling the compressed PSA tail gas to produce a cooled ammonia-depleted tail gas and an aqueous ammonia solution;

a separating device in fluid communication with the second heat exchanger(s) for separating the cooled ammonia-depleted tail gas from the aqueous ammonia solution; and

a selective catalytic reductive reactor in fluid communication with the furnace and the separating device for converting $NO_x$ to nitrogen gas and water;

wherein the apparatus comprises a conduit for feeding the aqueous ammonia solution to the SCR reactor; and

wherein the apparatus comprises a flue gas conduit for feeding the flue gas as a hot fluid from the furnace to the heat exchanger(s) and/or a cracked gas conduit for feeding the cracked gas as a hot fluid from the catalyst-containing reactor tubes to the first heat exchanger(s).

The cooled ammonia-depleted tail gas may be recycled to the first PSA device for further purification with the cracked gas or the ammonia-depleted gas derived therefrom. In these embodiments, the apparatus comprises a conduit for recycling the cooled ammonia-depleted tail gas to the first PSA device for purification with the cracked gas or the ammonia-depleted gas derived therefrom.

The cooled ammonia-depleted tail gas may be further purified in a second PSA device. In these embodiments, the apparatus comprises:

a second PSA device in fluid communication with the separating device for purifying the cooled ammonia-depleted tail gas to produce a second hydrogen product gas and a second PSA tail gas;

a second hydrogen gas conduit for removing the second hydrogen product gas from the second PSA device; and

a second PSA tail gas conduit for removing the second PSA tail gas from the second PSA device.

The apparatus may optionally comprise a conduit for feeding water to the separating device to form an aqueous ammonia solution.

The invention will now be described with reference to the processes depicted in the following figures.

BRIEF DESCRIPTION OF THE DRAWINGS

Fig. 1 is a process flow diagram of a first reference example of an ammonia cracking process to produce hydrogen;

Fig. 2 is a process flow diagram of another reference example based on the ammonia cracking process of Fig. 1 in which no hydrogen product is used as fuel;

Fig. 3 is a process flow diagram of a further reference example based on the ammonia cracking process of Figs. 1 & 2 in which only PSA tail gas is used as fuel;

Fig. 4 is a process flow diagram of a first embodiment of an ammonia cracking process to produce hydrogen according to the present invention; and

Fig. 5 is a process flow diagram of a second embodiment of an ammonia cracking process to produce hydrogen according to the present invention.

DETAILED DESCRIPTION OF THE INVENTION

A process is described herein for producing hydrogen by cracking ammonia. The process has particular application to producing so-called "green" hydrogen which is hydrogen created using renewable energy instead of fossil fuels. In this case, the ammonia is typically produced by electrolyzing water using electricity generated from renewable energy, such as wind and/or solar energy, to produce hydrogen which is then reacted catalytically with nitrogen (Haber process) to produce the ammonia which is more easily transported than hydrogen. After reaching its destination, the ammonia is then cracked to regenerate the hydrogen.

In this inventive process, the heat required for the reaction is provided by combustion of PSA tail gas (which typically contains some amount of residual hydrogen and ammonia) in the furnace. If the PSA tail-gas has insufficient heating value then either vaporised ammonia, a portion of the product hydrogen, or an alternative fuel are used with the tail-gas as a trim fuel.

In practice, natural gas could be used as a trim fuel, together with the PSA tail gas, as is practiced in SMRs for $H_2$. However, with the desire to maintain the "green" or renewable credentials of the hydrogen so produced, there is an incentive to use a "renewable fuel". This can be the cracked "renewable" ammonia, the ammonia itself, or another renewable energy source, such as biogas, or indeed electric heating whether the electricity is itself from a renewable source, in this case local to the cracking process as opposed to the renewable electricity used to generate the hydrogen which has been transported in the form of ammonia.

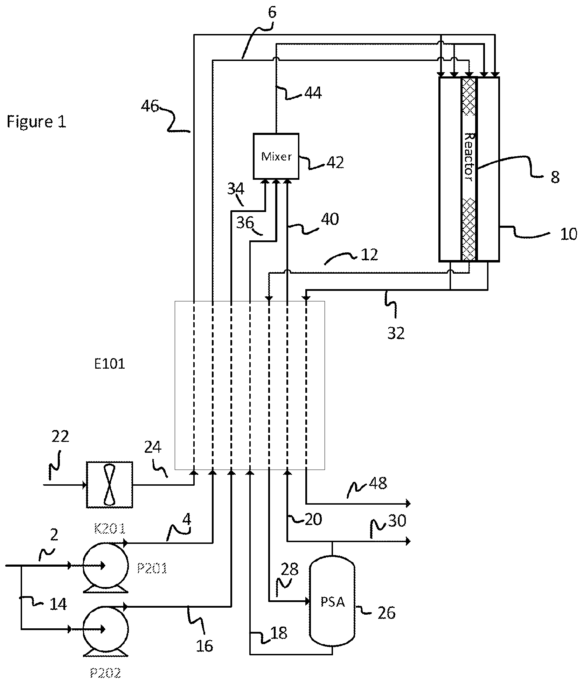

A reference example of the process is shown in Fig. 1. The process takes liquid ammonia from storage (not shown). The ammonia to be cracked (line 2) is pumped (pump P201) as liquid to a pressure greater than the desired cracking pressure (see GB1142941). The reaction pressure is a compromise between operating pressure and conversion according to Le Chatelier's principle. There is an incentive to operate the reactor (8) at higher pressure because pumping liquid ammonia requires less power and capital than compressing the product hydrogen.

The pressurised liquid ammonia (line 4) is then heated, vaporised (if it is below its critical pressure) and heated further, up to a temperature of greater than 250 °C *via* a heat exchanger (E101) using the heat available in the cracked gas leaving the reaction tubes and the flue gas from the furnace. In the figure, the heat exchanger (E101) is shown as one heat exchanger but, in practice, it will be a series of heat exchangers in a network.

The initial heating and vaporization of the pressurized liquid ammonia may alternatively take place against an alternative heat source, such as cooling water or ambient air. Typical reaction temperatures are greater than 500 °C (see US2601221), palladium-based systems can run at 600 °C and 10 bar, whereas RenCat's metal oxide-based system runs at less than 300 °C and 1 bar. (See https://www.ammoniaenergy.org/articles/ammonia-cracking-to-high-purity-hydrogen-for-pem-fuel-cells-in-denmark/).The operating pressure of the cracker is typically an optimization of several factors. Cracking of ammonia into hydrogen and nitrogen is favored by low pressure but other factors favor higher pressure, such as power consumption (which is minimized by pumping the feed ammonia rather than compressing the product hydrogen), and the PSA size (which is smaller at higher pressure).

The hot ammonia (line 6) enters reaction tubes of a reactor (8) at the desired pressure where additional heat is provided by the furnace (10) to crack the ammonia into nitrogen and hydrogen. The resulting mixture of residual ammonia, hydrogen and nitrogen exits (line 12) the reaction tubes of the reactor (8) at the reaction temperature and pressure. The reaction products are cooled in a heat exchanger (E101) against a combination of feed ammonia (from line 4), furnace fuel (in this case pumped ammonia from line 14, pump P202 and line 16; PSA tail gas from line 18; and product hydrogen in line 20) and combustion air (from line 22, fan K201 and line 24) to reduce the temperature as close as possible to that required for the inlet of a PSA device (26). Any residual heat in the cracked gas mixture (line 28) is removed in a water cooler (not shown) to achieve an inlet temperature to the PSA device (26) of in a range from about 20°C to 60°C, e.g. about 50°C.

The PSA product (line 30) is pure hydrogen compliant with ISO standard 14687 - Hydrogen Fuel Quality - with residual ammonia < 0.1 ppmv and nitrogen < 300 ppmv - at approximately the reaction pressure. The product hydrogen (line 30) is further compressed (not shown) for filling into tube trailers (not shown) for transport or it may be liquefied in a hydrogen liquefier (not shown) after any required compression. The PSA tail gas (line 18) or "purge gas" from the PSA device (26) is shown as being heated via the heat exchanger E101, using the cracked gas (line 12) leaving the reaction tubes of the reactor (8) or furnace flue gas (line 32), before being sent (in line 36) to the furnace as a combustion fuel. However, the PSA tail gas (line 18) may be fed directly to the furnace (10) without heating. Alternatively, the PSA tail gas may be preheated by an intermediate fluid, so as to allow a lower pressure for the PSA tail gas which increases hydrogen recovery.

The resultant warmed ammonia fuel (line 34) and warmed hydrogen (line 40) are depicted as combined with the (optionally) warmed PSA tail gas (line 36) in a mixer (42) to produce a combined fuel which is fed (line 44) to the furnace (10) for combustion to generate the flue gas (line 32 and, after cooling in E101, line 48). However, it should be noted that one or more of the fuels could be fed directly to the furnace without prior mixing. The warmed air (for combustion with the fuel) is fed to the furnace (10) in line 46.

One of the aims of the present process is to maximise the amount of $H_2$ generated by cracking the renewable ammonia. That means minimising the amount of $H_2$ used as fuel, or ammonia if ammonia were to be used as a fuel directly. Therefore, heat integration is important so as to use the hot flue gas and cracked gas appropriately, for instance to preheat air (line 24) and ammonia (line 4) to the cracker as this reduces the amount of "fuel" to be used in the burners of the furnace (10). This leads to higher hydrogen recovery as less of the hydrogen is lost in the furnace flue gas (lines 32 & 48) as water. Therefore, steam generation, for instance, should be minimised in favour of intra-process heat integration.

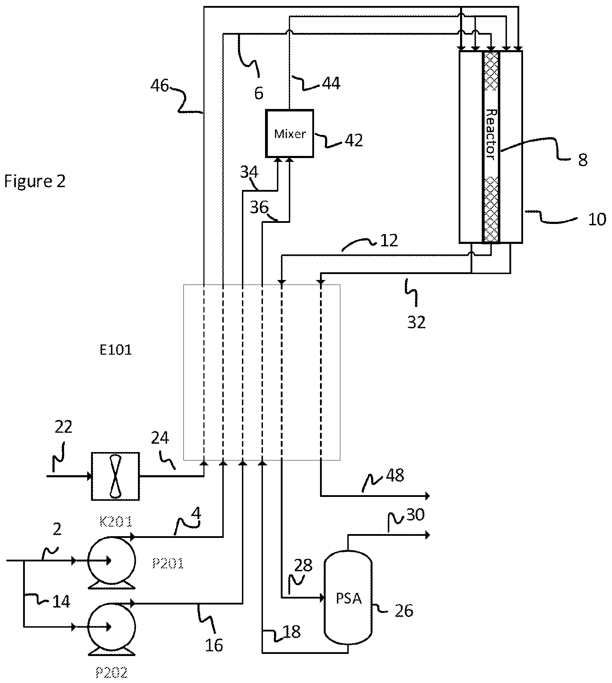

Fig. 1 shows ammonia provided as fuel (lines 34 & 44) and feed (line 6) and it also shows product hydrogen as fuel (lines 40 & 44) - in practice, it is likely only one of these streams would be used as fuel. In this regard, Fig. 2 depicts a similar process to that of Fig. 1 in which ammonia is used as a fuel (line 34) but not product hydrogen. All other features of the process depicted in Fig. 2 are the same as in Fig. 1 and the common features have been given the same reference numerals.

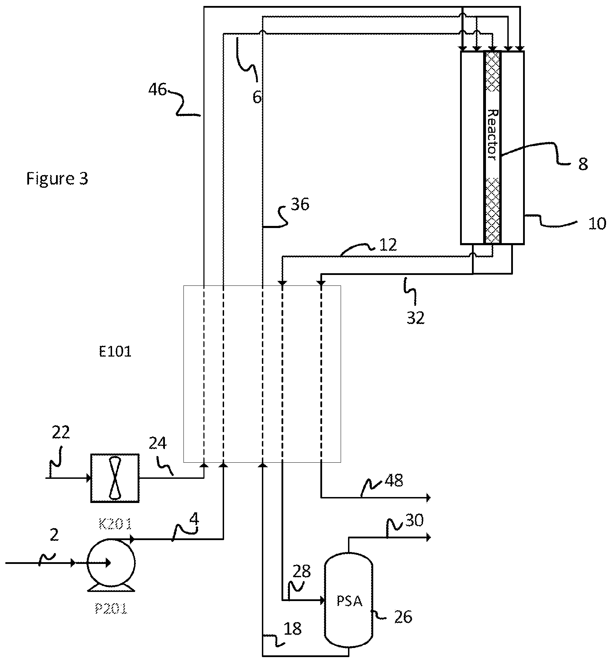

Fig. 3 depicts a process similar to that depicted in Fig. 2 but which is driven only by the ammonia from the PSA. In this process, the recovery of hydrogen (line 30) from the PSA may be adjusted to provide a tail gas (line 18) which, when burned, will provide all the heat required by the process, thus eliminating the need for a trim fuel. All other features of the process depicted in Fig. 3 are the same as in Fig. 1 and the common features have been given the same reference numerals.

Should there be a viable alternative source of renewable energy for the cracking reactions, as discussed above, one could consider recovering hydrogen from the PSA tail gas to increase the net hydrogen production from the process in addition to the hydrogen produced from the PSA. Such a process could use membranes, which have a selective layer that is readily permeable to hydrogen but relatively impermeable to nitrogen to separate hydrogen from the nitrogen rich PSA tail gas stream.

Ammonia may need to be removed particularly but not exclusively if membranes are being used as part of the separation process since membrane material can be intolerant of high concentrations of ammonia and ammonia is a fast gas and would permeate with the hydrogen so would accumulate in the process if not removed. $NH_3$ may be removed for instance by a water wash or other well-known technology for ammonia removal, upstream of the membrane. The ammonia recovered in the ammonia removal step can be recovered to the feed to the cracking process using a stripping column to recover the ammonia from the water used to absorb the ammonia from the cracked gas. This could theoretically increase the hydrogen recovery from the process up to 100%. Recovering $NH_3$ from the cracked gas simplifies the hydrogen purification steps, may increase the recovery of hydrogen from the ammonia if the separated ammonia is recovered as feed, and also removes ammonia from the feed to the burners, significantly reduces concerns over production of $NO_x$ caused by burning $NH_3$ depending on the extent of the ammonia removal step.

Water may also need to be removed from the feed ammonia to prevent damage to the ammonia cracking catalyst. Typically, ammonia has small quantities of water added to it to prevent stress corrosion cracking in vessels during shipping and storage. This might need to be removed. However, the water removal can be incorporated into the stripping column mentioned above. The ammonia would be evaporated at the required pressure, taking care in the design of the evaporator to ensure that the water was also carried through to the stripping column with the evaporator ammonia. This mostly vapour phase ammonia enters a mid-point of the column and pure ammonia leaves through the top of the column. The column has a partial condenser (condenses only enough liquid for the reflux) and the overhead vapour contains the feed ammonia (free of water) plus the ammonia recovered from the cracker gas stream.

It may be more energy efficient to feed the cracked gas first to a membrane to produce an enriched $H_2$ permeate stream and a $N_2$-rich retentate stream that could be vented. The enriched $H_2$ permeate can be further purified in the PSA. A second membrane could be added to the PSA tail gas stream to further boost the overall H$_2$ recovery. This configuration would greatly reduce the tail-gas compressor size.

The use of a membrane separator to increase hydrogen recovery allows the nitrogen to be vented from the process without passing through the combustion section of the process. In processes where the nitrogen stream is at pressure, it would be beneficial to expand the nitrogen to atmospheric pressure before venting to recover power through an expansion turbine. It would increase the amount of power recovered if the pressurized nitrogen were to be heated before expansion using heat available in the flue gas or cracked gas stream.

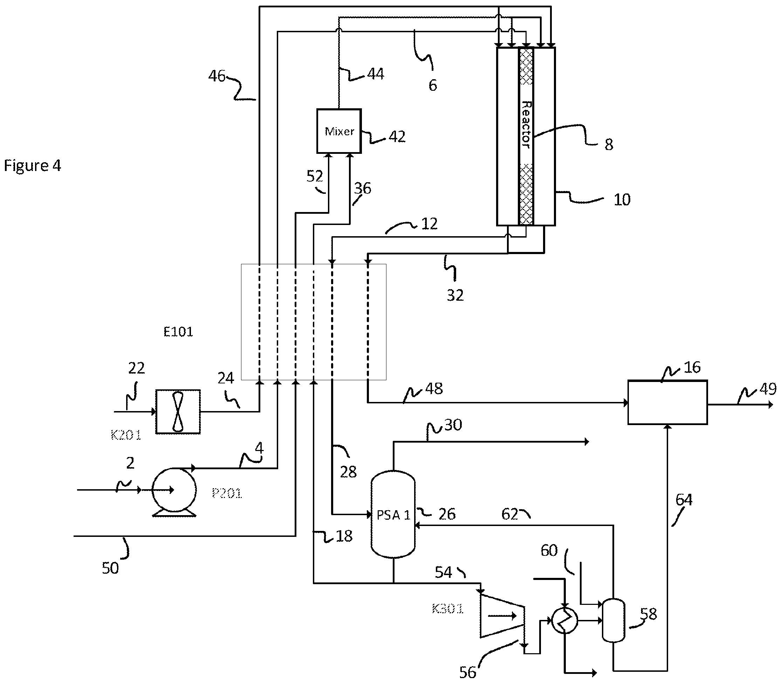

As discussed above, the heat required for the cracking reaction is provided by the combustion of one of more fuels in furnace (10). The resultant flue gas (line 32) comprises NO$_X$. Fig. 4 depicts a process according to the present invention in which an aqueous ammonia stream (line 64) is recovered from the first PSA tail gas (line 54). The features of the process in Fig. 4 that are common to the processes of Figs. 1 to 3 have been given the same reference numerals. The following is a discussion of the new features in Fig. 4.

A fuel (line 50) is warmed in the heat exchange (E101) and combined with the (optionally) warmed PSA tail gas (line 36) to produce a combined fuel which is fed (line 44) to the furnace (10) for combustion to heat the catalyst-filled tubes of the cracking reactor (8) and to generate the flue gas (line 32 and, after cooling in E101 line 48). The warmed air is fed to the furnace (10) in line 46. The fuel (line 50) and the PSA tail gas (line 36) can be fed to the furnace separately without mixing (not shown).

The cooled cracked gas (line 28) is fed to a first PSA device (26). The cracked gas is separated to form the hydrogen product (line 30) and tail gas (line 54). Part of the tail gas (line 54) from the first PSA is compressed in a compressor (K301) to produce compressed PSA tail gas (line 56). The compressed PSA tail gas (line 56) is chilled to a temperature in the range from about 10°C to about 60 °C and fed to the separator (58). Chilling of the compressed PSA tail gas can be achieved by heat exchange against one or more coolants selected from water, the cold feed ammonia and the one or more cooled fluids produced from heating the liquid ammonia (shown in Figure 4, but cooling stream not numbered).

Water (line 60) may optionally be added to the compressed first PSA tail gas to form a mixture comprising a cooled ammonia-depleted tail gas and aqueous ammonia solution. If water is present in the feed ammonia and does not need to be removed prior to cracking (i.e. if the cracking catalyst is water-tolerant) then additional water may not be required. However, additional water may still be added as it aids the removal of ammonia from the PSA tail gas by acting as a solvent. The more water present, the more ammonia will be removed from the PSA; however, the concentration of the resulting ammonia solution will of course be lower. The concentration of the ammonia solution is typically from about 10 wt. % to about 30 wt. %, and preferably about 25 wt. %. The aim is not necessarily to remove all of the ammonia from the PSA tail gas but rather to provide a sufficient amount of ammonia solution for the selective catalytic reduction.

The separator (58) may be any suitable separation device known in the art. The separator is preferably a simple phase separator or a separation column.

The cooled ammonia depleted tail gas (line 62) is separated from the aqueous ammonia solution (line 64) and the aqueous ammonia solution (line 64) is fed to selective catalytic reduction (SCR) reactor (16). Cooled flue gas (line 48) is fed to the SCR reactor (16) where it is contacted with a selective reduction catalyst in the presence of the aqueous ammonia solution to convert NO$_X$ to nitrogen gas and water.

Although the SCR reactor is shown in this figure for simplicity as being connected to the cooled flue gas, it could also be positioned within the heat exchange system E101 or elsewhere. The SCR reactor typically operates at a temperature in the range from about 200°C to about 500°C, preferably from about 300°C to about 400°C and so the reactor is positioned appropriately to operate at those temperatures.

The cooled ammonia-depleted tail gas (line 62) or "purge gas" (line 18) from the first PSA device (26) is recycled to the first PSA device (26). The amount of PSA tail gas that is recycled corresponds to an increase in hydrogen recovery but will be approximately 50%.

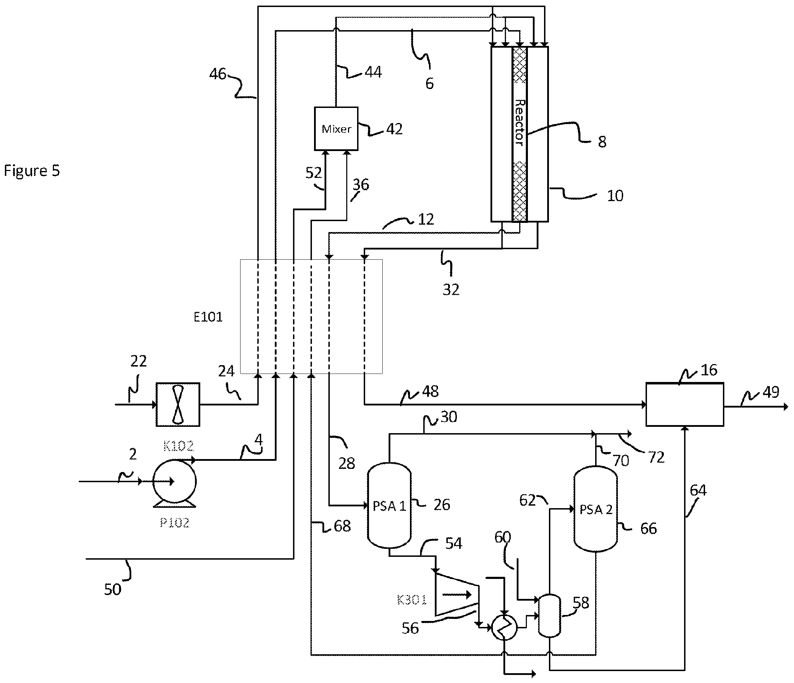

Alternatively, as shown in Fig.5, the ammonia-depleted tail gas (line 62) can be fed to a second PSA device (66). The product hydrogen from the second PSA device (line 70) is combined with the hydrogen product (line 30) to produce a combined hydrogen product gas (line 72) and to increase the amount of hydrogen produced in the process. Similarly to the processes of Fig. 1 and Fig. 2, the PSA tail gas (line 68) from the second PSA device (66) can be heated via the heat exchanger E101, using the cracked gas (line 12) leaving the reaction tubes or furnace flue gas (line 32), before being sent (in line 36) to the furnace (10) as a combustion fuel. However, the second PSA tail gas (line 68) may be fed directly to the furnace (10) without heating. Alternatively, the second PSA tail gas (line 68) may be heated by heat exchange with the one or more hot fluids.

EXAMPLES

The invention will now be illustrated with reference to the following Invention Examples and by comparison with the following Reference Examples.

For the purposes of the simulations, both the invention Examples and the Reference Examples assume an equilibrium for the cracking reaction at 11 bara and 500 °C.

REFERENCE EXAMPLE 1

The process depicted in Fig. 2 has been simulated by computer (Aspen Plus, ver. 10 by Aspen Technology Inc.) and the results are depicted in Table 1.

| Fluid Description | | Feed Ammonia | Fuel Ammonia | Air | Cracked Ammonia | Cooled Crude Hydrogen to PSA | PSA Offgas | Hydrogen Product | Cooled Flue Gas |
|---|---|---|---|---|---|---|---|---|---|
| Stream number | | 2 | 14 | 22 | 12 | 28 | 18 | 30 | 48 |
| Composition | | | | | | | | | |
| Hydrogen | mol% | 0.0000 | 0.0000 | 0.0000 | 73.8791 | 73.8791 | 31.8188 | 100.0000 | 0.0000 |
| Nitrogen | mol% | 0.0000 | 0.0000 | 76.6000 | 24.6264 | 24.6264 | 64.2803 | 0.0000 | 75.6694 |
| Ammonia | mol% | 99.8100 | 99.8100 | 0.0000 | 1.3981 | 1.3981 | 3.6492 | 0.0000 | 0.0000 |
| Water | mol% | 0.1900 | 0.1900 | 1.8500 | 0.0964 | 0.0964 | 0.2517 | 0.0000 | 22.7084 |
| Oxygen | mol% | 0.0000 | 0.0000 | 20.6000 | 0.0000 | 0.0000 | 0.0000 | 0.0000 | 1.0762 |
| Argon | mol% | 0.0000 | 0.0000 | 0.9200 | 0.0000 | 0.0000 | 0.0000 | 0.0000 | 0.5287 |
| Carbon Dioxide | mol% | 0.0000 | 0.0000 | 0.0300 | 0.0000 | 0.0000 | 0.0000 | 0.0000 | 0.0172 |
| Methane | mol% | 0.0000 | 0.0000 | 0.0000 | 0.0000 | 0.0000 | 0.0000 | 0.0000 | 0.0000 |
| Ethane | mol% | 0.0000 | 0.0000 | 0.0000 | 0.0000 | 0.0000 | 0.0000 | 0.0000 | 0.0000 |
| Flowrate (total) | kmol/hr | 17.6021 | 0.8500 | 16.1778 | 33.5035 | 33.5035 | 12.8355 | 20.6680 | 28.1505 |
| Pressure | bar (abs) | 1.0000 | 1.0000 | 1.0133 | 11.0000 | 11.0000 | 1.4000 | 10.5000 | 1.0500 |
| Temperature | °C | -33.6938 | -33.6938 | 20.0000 | 500.0000 | 50.0000 | 40.0000 | 49.9922 | 117.4344 |

Table 1

In this Reference Example, hydrogen recovery from the ammonia is 77.18% with the PSA recovery at 83.5%. The total power of the ammonia feed pump (P201), the ammonia fuel pump (P202) and the air fan (K201) is about 1.36 kW.

REFERENCE EXAMPLE 2

The process depicted in Fig. 3 has been simulated by computer (Aspen Plus, ver. 10) and the results are depicted in Table 2.

| Fluid Description | | Feed Ammonia | Air | Cracked Ammonia | Cooled Crude Hydrogen to PSA | PSA Offgas | Hydrogen Product | Cooled Flue Gas |
|---|---|---|---|---|---|---|---|---|
| Stream number | | 2 | 22 | 12 | 28 | 18 | 30 | 48 |
| Composition | | | | | | | | |
| Hydrogen | mol% | 0.0000 | 0.0000 | 73.8791 | 73.8791 | 36.8306 | 100.0000 | 0.0000 |
| Nitrogen | mol% | 0.0000 | 76.6000 | 24.6264 | 24.6264 | 59.5552 | 0.0000 | 75.6244 |
| Ammonia | mol% | 99.8100 | 0.0000 | 1.3981 | 1.3981 | 3.3810 | 0.0000 | 0.0000 |
| Water | mol% | 0.1900 | 1.8500 | 0.0964 | 0.0964 | 0.2332 | 0.0000 | 22.7504 |
| Oxygen | mol% | 0.0000 | 20.6000 | 0.0000 | 0.0000 | 0.0000 | 0.0000 | 1.0783 |
| Argon | mol% | 0.0000 | 0.9200 | 0.0000 | 0.0000 | 0.0000 | 0.0000 | 0.5297 |
| Carbon Dioxide | mol% | 0.0000 | 0.0300 | 0.0000 | 0.0000 | 0.0000 | 0.0000 | 0.0173 |
| Methane | mol% | 0.0000 | 0.0000 | 0.0000 | 0.0000 | 0.0000 | 0.0000 | 0.0000 |
| Ethane | mol% | 0.0000 | 0.0000 | 0.0000 | 0.0000 | 0.0000 | 0.0000 | 0.0000 |
| Flowrate (total) | kmol/hr | 17.6832 | 16.3022 | 35.2398 | 35.2398 | 14.5719 | 20.6680 | 28.3138 |
| Pressure | bar (abs) | 1.0000 | 1.0133 | 11.0000 | 11.0000 | 1.4000 | 10.5000 | 1.0500 |
| Temperature | °C | -33.6938 | 20.0000 | 500.0000 | 50.0000 | 40.0000 | 49.9922 | 119.1601 |

Table 2

In this Reference Example, hydrogen recovery from the ammonia is 77.05% with the PSA recovery at 79.4%. The total power of the ammonia feed pump (P201) and the air fan (K201) is about 1.37 kW.

INVENTION EXAMPLE 1

The process depicted in Fig. 4 has been simulated by computer (Aspen Plus, ver. 10) and the results are depicted in Table 3.

| Fluid Description | | Feed Ammonia | Natural Gas Fuel | Air | Cracked Ammonia | Cooled Crude Hydrogen to PSA1 | PSA1 Offgas | PSA2 Offgas |
|---|---|---|---|---|---|---|---|---|
| Stream number | | 2 | 58 | 22 | 12 | 28 | 54 | 68 |
| | | | | | | | | |
| Composition | | | | | | | | |
| Hydrogen | mol% | 0.00 | 0.00 | 0.00 | 73.66 | 73.66 | 31.82 | 2.71 |
| Nitrogen | mol% | 0.00 | 1.00 | 78.06 | 24.63 | 24.63 | 64.28 | 88.00 |
| Ammonia | mol% | 99.81 | 0.00 | 0.00 | 1.46 | 1.46 | 3.65 | 3.17 |
| Water | mol% | 0.19 | 0.00 | 1.05 | 0.10 | 0.10 | 0.25 | 0.12 |
| Oxygen | mol% | 0.00 | 0.00 | 20.66 | 0.00 | 0.00 | 0.00 | 0.00 |
| Argon | mol% | 0.00 | 0.00 | 0.92 | 0.00 | 0.00 | 0.00 | 0.00 |
| Carbon Dioxide | mol% | 0.00 | 0.50 | 0.03 | 0.00 | 0.00 | 0.00 | 0.00 |
| Methane | mol% | 0.00 | 94.28 | 0.00 | 0.00 | 0.00 | 0.00 | 0.00 |
| Ethane | mol% | 0.00 | 4.21 | 0.00 | 0.00 | 0.00 | 0.00 | 0.00 |
| | | | | | | | | |
| Flowrate (total) | kmol/hr | 14.60 | 1.21 | 16.00 | 28.93 | 28.93 | 11.08 | 6.19 |
| Pressure | bar (abs) | 1.00 | 19.11 | 1.01 | 11.00 | 11.00 | 1.40 | 1.36 |
| Temperature | °C | -33.69 | 30.00 | 25.00 | 500.00 | 50.00 | 40.00 | 40.00 |
| Fluid Description | | Compressed PSA1 offgas | Wash Water | Ammoniated Water | Washed, compressed PSA1 offgas | Hydrogen Product | Flue Gas | |
| Stream number | | 56 | 80 | 84 | 62 | 72 | 49 | |
| | | | | | | | | |
| Composition | | | | | | | | |
| Hydrogen | mol% | 31.82 | 0.00 | 0.00 | 32.30 | 100.00 | 0.00 | |
| Nitrogen | mol% | 64.28 | 0.00 | 0.00 | 65.25 | 0.00 | 77.97 | |
| Ammonia | mol% | 3.65 | 0.00 | 22.15 | 2.35 | 0.00 | 0.00 | |
| Water | mol% | 0.25 | 100.00 | 77.85 | 0.09 | 0.00 | 15.28 | |
| Oxygen | mol% | 0.00 | 0.00 | 0.00 | 0.00 | 0.00 | 1.28 | |
| Argon | mol% | 0.00 | 0.00 | 0.00 | 0.00 | 0.00 | 0.59 | |
| Carbon Dioxide | mol% | 0.00 | 0.00 | 0.00 | 0.00 | 0.00 | 4.99 | |
| Methane | mol% | 0.00 | 0.00 | 0.00 | 0.00 | 0.00 | 0.00 | |
| Ethane | mol% | 0.00 | 0.00 | 0.00 | 0.00 | 0.00 | 0.00 | |
| | | | | | | | | |
| Flowrate (total) | kmol/hr | 11.08 | 0.50 | 0.67 | 10.92 | 20.87 | 25.03 | |
| Pressure | bar (abs) | 11.00 | 12.00 | 11.00 | 11.00 | 10.50 | 1.05 | |
| Temperature | °C | 30.00 | 25.00 | 10.00 | 10.00 | 44.54 | 141.15 | |

Table 3

In this Example, hydrogen recovery from the ammonia is 77.18% with the PSA recovery at 83.5%. The total power of the ammonia feed pump (P201) and the air fan (K201) is about 1.35 kW.
Based on 1 tonne/day of hydrogen production the ammoniated water is 22.1 mol. % with a total molar flowrate of ammonia of 0.15 kmol/hr. The flow rate of the flue gas is 25 kmol/hr. If the flue gas contained 5000 ppm NO that would be 0.125 kmol/hr NO and therefore the NO could be removed by reacting with the ammonia recovered from the flue gas thereby saving on the requirement to have a separate supply of ammoniate solution.

**Claims**

1. A method for producing hydrogen from ammonia, comprising:

pressurizing liquid ammonia to produce a pressurized liquid ammonia;
heating (and optionally vaporizing) the pressurized liquid ammonia by heat exchange with one or more hot fluids to produce heated ammonia;
combusting a fuel in a furnace to heat catalyst-containing reactor tubes and to form a flue gas comprising oxides of nitrogen ($NO_x$);
contacting the flue gas with a selective reduction catalyst in the presence of ammonia in a selective catalytic reduction (SCR) reactor to convert $NO_x$ to nitrogen gas and water;
supplying the heated ammonia to the catalyst-containing reactor tubes to cause cracking of the ammonia into a cracked gas containing hydrogen gas, nitrogen gas and residual ammonia:

purifying the cracked gas in a first PSA device to produce a first hydrogen product gas and a first PSA tail gas comprising ammonia;
compressing at least a portion of the first PSA tail gas to produce compressed PSA tail gas;
cooling the compressed PSA tail gas to produce cooled ammonia-depleted tail gas and an aqueous ammonia solution; and
separating the cooled ammonia-depleted tail gas from the aqueous ammonia solution;

wherein at least a portion of the separated aqueous ammonia solution is fed to the SCR reactor to provide the ammonia for the SCR reaction; and
wherein the one or more hot fluids comprise the flue gas and/or the cracked gas.

2. A method according to Claim 1, wherein the compressed PSA tail gas is cooled to a temperature of from about 5°C to about 60°C.

3. A method according to Claim 1 or Claim 2, wherein the compressed PSA tail gas is cooled by heat exchange with at least one coolant selected from water, the pressurized liquid ammonia; and the one or more cooled fluids produced from heating the liquid ammonia.

4. A method according to any of the preceding claims, wherein water is added to the compressed first PSA tail gas.

5. A method according to Claim 4, wherein the water is chilled to a temperature below about 25°C before adding to the compressed first PSA tail gas.

6. A method according to any of the preceding claims, wherein the liquid ammonia comprises from 0.2 to 0.5 wt% water.

7. A method according to any of the preceding claims, comprising recycling the cooled ammonia-depleted tail gas to the first PSA device for purification with the cracked gas or the ammonia-depleted gas derived therefrom.

8. A method according to any of Claims 1 to 6, comprising purifying the cooled ammonia-depleted tail gas in a second PSA device to produce a second hydrogen product gas and a second PSA tail gas.

9. A method according to Claim 8, wherein the second hydrogen product gas is combined with the first hydrogen product gas to produce a combined hydrogen product gas.

10. A method according to any of the preceding claims, wherein the fuel combusted in the furnace comprises one or more of ammonia, the first PSA tail gas, the second PSA tail gas, hydrogen, methane, the cooled ammonia-depleted tail gas, or a gas derived therefrom.

11. A method according to Claims 8 to 10, wherein the fuel combusted in the furnace comprises the second PSA tail gas.

12. A method according to any of the preceding claims, wherein the selective reduction catalyst comprises at least one of titanium oxide, vanadium oxide, molybdenum oxide, tungsten oxide or a zeolite.

13. A method according to any of the preceding claims, wherein the first PSA tail gas is compressed to a pressure of from about 5 to about 50 bar.

14. An apparatus for producing hydrogen from ammonia, comprising:

a pump for pressurizing liquid ammonia to produce pressurized liquid ammonia;
at least one first heat exchanger in fluid communication with the pump for heating (and optionally vaporizing) the pressurized liquid ammonia from the pump by heat exchange with one or more hot fluids;
catalyst-containing reactor tubes in fluid communication with the first heat exchanger(s), for cracking heated ammonia from the first heat exchanger(s) to produce a first cracked gas containing hydrogen gas, nitrogen gas and residual ammonia;
a furnace in thermal communication with the catalyst-containing reactor tubes for combustion of a fuel to heat the catalyst-containing reactor tubes and to form a flue gas comprising oxides of nitrogen ($NO_x$);
a first PSA device in fluid communication with the catalyst-containing reactor tubes for purifying the cracked gas to produce a first hydrogen product gas and a first PSA tail gas;
a compressor in fluid communication with the first PSA device for compressing at least a portion of the first PSA tail gas to produce compressed PSA tail gas;
at least one second heat exchanger in fluid communication with the compressor for cooling the compressed PSA tail gas to produce a cooled ammonia-depleted tail gas and an aqueous ammonia solution;
a separating device in fluid communication with the second heat exchanger(s) for separating the cooled ammonia-depleted tail gas from the aqueous ammonia solution; and
a selective catalytic reductive reactor in fluid communication with the furnace and the separating device for converting $NO_x$ to nitrogen gas and water;
wherein the apparatus comprises a conduit for feeding the aqueous ammonia solution to the SCR reactor; and
wherein the apparatus comprises a flue gas conduit for feeding the flue gas as a hot fluid from the furnace to the first heat exchanger(s) and/or a cracked gas conduit for feeding the cracked gas as a hot fluid from the catalyst-containing reactor tubes to the first heat exchanger(s).

15. An apparatus according to Claim 14, further comprising a conduit for recycling the cooled ammonia-depleted tail gas to the first PSA device.

16. An apparatus according to Claim 14, further comprising:

a second PSA device in fluid communication with the separating device for purifying the cooled ammonia-depleted tail gas to produce a second hydrogen product gas and a second PSA tail gas;
a second hydrogen gas conduit for removing the second hydrogen gas from the second PSA device; and
a second PSA tail gas conduit for removing the second PSA tail gas from the second PSA device.

17. An apparatus according to any of Claims 14 to 16, further comprising a conduit for feeding water to the separating device.

**Patentansprüche**

1. Verfahren zum Erzeugen von Wasserstoff aus Ammoniak, umfassend:

Unterdrucksetzen von flüssigem Ammoniak für das Erzeugen eines unter Druck gesetzten flüssigen Ammoniaks,
Erhitzen (und optional Verdampfen) des unter Druck gesetzten flüssigen Ammoniaks durch einen Wärmetausch mit einem oder mehreren heißen Fluiden für das Erzeugen eines erhitzten Ammoniaks,
Verbrennen eines Brennstoffs in einem Ofen für das Erhitzen von Reaktorröhren mit einem darin enthaltenen Katalysator und für das Bilden eines Rauchgases, das Oxide von Stickstoff ($NO_x$) enthält,
Kontaktieren des Rauchgases mit einem Selektive-Reduktion-Katalysator in Anwesenheit von Ammoniak in einem Selektive-katalytische-Reduktion (SCR)-Reaktor für das Wandeln von $NO_x$ zu Stickstoffgas und Wasser,
Zuführen des erhitzten Ammoniaks zu den einen Katalysator enthaltenden Reaktorröhren für das Veranlassen eines Spaltens des Ammoniaks in ein Spaltgas, das Wasserstoffgas, Stickstoffgas und restliches Ammoniak enthält,
Reinigen des Spaltgases in einer ersten Druckwechsel-Adsorption (DWA)-Vorrichtung für das Erzeugen eines ersten Wasserstoffproduktgases und eines ersten DWA-Restgases, das Ammoniak enthält,

Komprimieren wenigstens eines Teils des ersten DWA-Restgases für das Erzeugen eines komprimierten DWA-Restgases,

Kühlen des komprimierten DWA-Restgases für das Erzeugen eines gekühlten ammoniakarmen Restgases und einer wässrigen Ammoniaklösung, und

Trennen des gekühlten ammoniakarmen Restgases von der wässrigen Ammoniaklösung,

wobei wenigstens ein Teil der getrennten wässrigen Ammoniaklösung zu dem SCR-Reaktor geführt wird, um das Ammoniak für die SCR-Reaktion vorzusehen, und

wobei das eine oder die mehreren heißen Fluide das Rauchgas und/oder das Spaltgas umfassen.

2. Verfahren nach Anspruch 1, wobei das komprimierte DWA-Restgas zu einer Temperatur von ungefähr 5°C bis ungefähr 60°C gekühlt wird.

3. Verfahren nach Anspruch 1 oder 2, wobei das komprimierte DWA-Restgas durch einen Wärmetausch mit wenigstens einem Kühlmittel gekühlt wird, das aus Wasser, dem unter Druck gesetzten flüssigen Ammoniak und der einen oder den mehreren gekühlten Fluiden, die durch das Erhitzen des flüssigen Ammoniaks erzeugt werden, ausgewählt wird.

4. Verfahren nach einem der vorstehenden Ansprüche, wobei Wasser zu dem komprimierten ersten DWA-Restgas hinzugefügt wird.

5. Verfahren nach Anspruch 4, wobei das Wasser zu einer Temperatur unter ungefähr 25°C gekühlt wird, bevor es zu dem komprimierten ersten DWA-Restgas hinzugefügt wird.

6. Verfahren nach einem der vorstehenden Ansprüche, wobei das flüssige Ammoniak zwischen 0,2 und 0,5 Gew.-% Wasser enthält.

7. Verfahren nach einem der vorstehenden Ansprüche, das das Zurückführen des gekühlten, ammoniakarmen Restgases zu der ersten DWA-Vorrichtung für eine Reinigung mit dem Spaltgas oder dem daraus abgeleiteten ammoniakarmen Gas umfasst.

8. Verfahren nach einem der Ansprüche 1 bis 6, das das Reinigen des gekühlten ammoniakarmen Restgases in einer zweiten DWA-Vorrichtung für das Erzeugen eines zweiten Wasserstoffproduktgases und eines zweiten DWA-Restgases umfasst.

9. Verfahren nach Anspruch 8, wobei das zweite Wasserstoffproduktgas mit dem ersten Wasserstoffproduktgas kombiniert wird, um ein kombiniertes Wasserstoffproduktgas zu erzeugen.

10. Verfahren nach einem der vorstehenden Ansprüche, wobei der in dem Ofen verbrannte Brennstoff Ammoniak, das erste DWA-Restgas, das zweite DWA-Restgas, Wasserstoff, Methan, das gekühlte ammoniakarme Restgas oder ein davon abgeleitetes Gas enthält.

11. Verfahren nach den Ansprüchen 8 bis 10, wobei der in dem Ofen verbrannte Brennstoff das zweite DWA-Restgas enthält.

12. Verfahren nach einem der vorstehenden Ansprüche, wobei der Selektive-Reduktion-Katalysator Titanoxid, Vanadiumoxid, Molybdänoxid, Wolframoxid oder ein Zeolith enthält.

13. Verfahren nach einem der vorstehenden Ansprüche, wobei das erste DWA-Restgas zu einem Druck von ungefähr 5 bis ungefähr 50 bar komprimiert wird.

14. Vorrichtung zum Erzeugen von Wasserstoff aus Ammoniak, umfassend:

eine Pumpe zum Unterdrucksetzen von flüssigem Ammoniak für das Erzeugen eines unter Druck gesetzten flüssigen Ammoniaks,

wenigstens einen ersten Wärmetauscher in einer Fluidverbindung mit der Pumpe für das Erhitzen (und optional Verdampfen) des unter Druck gesetzten flüssigen Ammoniaks von der Pumpe durch einen Wärmetausch mit einem oder mehreren heißen Fluiden,

Reaktorröhren mit einem darin enthaltenen Katalysator und in einer Fluidverbindung mit dem oder den ersten Wärmetauschern für das Spalten des erhitzten Ammoniaks von dem oder den ersten Wärmetauschern für das Erzeugen eines ersten Spaltgases, das Wasserstoffgas, Stickstoffgas und restliches Ammoniak enthält,

einen Ofen in einer thermischen Verbindung mit dem einen Katalysator enthaltenden Reaktorröhren für das Verbrennen eines Brennstoffs für das Erhitzen der einen Katalysator enthaltenden Reaktorröhren und das Bilden eines Rauchgases, das Oxide von Stickstoff ($NO_x$) enthält,

eine erste Druckwechsel-Adsorption (DWA)-Vorrichtung in einer Fluidverbindung mit dem einen Katalysator enthaltenden Reaktorröhren für das Reinigen des Spaltgases für das Erzeugen eines ersten Wasserstoffproduktgases und eines ersten DWA-Restgases,

einen Kompressor in einer Fluidverbindung mit der ersten DWA-Vorrichtung für das Komprimieren wenigstens eines Teils des ersten DWA-Restgases für das Erzeugen eines komprimierten DWA-Restgases,

wenigstens einen zweiten Wärmetauscher in einer Fluidverbindung mit dem Kompressor für das Kühlen des komprimierten DWA-Restgases für das Erzeugen eines gekühlten ammoniakarmen Restgases und einer wässrigen Ammoniaklösung,

eine Trennvorrichtung in einer Fluidkommunikation mit dem oder den zweiten Wärmetauschern für das Trennen des gekühlten ammoniakarmen Restgases von der wässrigen Ammoniaklösung, und

einen Selektive-katalytische-Reduktion (SCR)-Reaktor in einer Fluidverbindung mit dem Ofen und der Trennvorrichtung für das Wandeln von $NO_x$ zu Stickstoffgas und Wasser,

wobei die Vorrichtung eine Leitung für das Zuführen der wässrigen Ammoniaklösung zu dem SCR-Reaktor umfasst, und

wobei die Vorrichtung eine Rauchgasleitung für das Zuführen des Rauchgases als eines heißen Fluids von dem Ofen zu dem oder den ersten Wärmetauschern und/oder eine Spaltgasleitung für das Zuführen des Spaltgases als eines heißen Fluids von den einen Katalysator enthaltenden Reaktorröhren zu dem oder den ersten Wärmetauschern umfasst.

15. Vorrichtung nach Anspruch 14, die weiterhin eine Leitung für das Zurückführen des gekühlten ammoniakarmen Restgases zu der ersten DWA-Vorrichtung umfasst.

16. Vorrichtung nach Anspruch 14, die weiterhin umfasst:

eine zweite DWA-Vorrichtung in einer Fluidverbindung mit der Trennvorrichtung für das Reinigen des gekühlten ammoniakarmen Restgases für das Erzeugen eines zweiten Wasserstoffproduktgases und eines zweiten DWA-Restgases,

eine zweite Wasserstoffgasleitung für das Entfernen des zweiten Wasserstoffgases aus der zweiten DWA-Vorrichtung, und

eine zweite DWA-Restgas-Leitung für das Entfernen des zweiten DWA-Restgases aus der zweiten DWA-Vorrichtung,

17. Vorrichtung nach einem der Ansprüche 14 bis 16, die weiterhin eine Leitung für das Zuführen von Wasser zu der Trennvorrichtung umfasst.

**Revendications**

1. Procédé de production d'hydrogène à partir d'ammoniac, comprenant :

la pressurisation d'ammoniac liquide pour produire de l'ammoniac liquide sous pression ;

le chauffage (et éventuellement la vaporisation) de l'ammoniac liquide sous pression par échange de chaleur avec un ou plusieurs fluides chauds pour produire de l'ammoniac chauffé ;

la combustion d'un combustible dans un four pour chauffer les tubes du réacteur contenant le catalyseur et former un gaz de combustion comprenant des oxydes d'azote ($NO_x$) ;

la mise en contact du gaz de combustion avec un catalyseur de réduction sélective en présence d'ammoniac dans un réacteur de réduction catalytique sélective (SCR) pour convertir les $NO_x$ en azote gazeux et en eau ;

l'alimentation de l'ammoniac chauffé aux tubes de réacteur contenant le catalyseur pour provoquer le craquage de l'ammoniac en un gaz craqué contenant de l'hydrogène gazeux, de l'azote gazeux et de l'ammoniac résiduel ;

la purification du gaz craqué dans un premier dispositif PSA pour produire un premier gaz de produit d'hydrogène et un premier gaz résiduaire de PSA comprenant de l'ammoniac ;

la compression d'au moins une partie du premier gaz résiduaire de PSA pour produire un gaz résiduaire de PSA comprimé ;

le refroidissement du gaz résiduaire de PSA comprimé pour produire un gaz résiduaire refroidi et appauvri en ammoniac et une solution aqueuse d'ammoniac ; et

la séparation du gaz résiduaire refroidi et appauvri en ammoniac de la solution aqueuse d'ammoniac ;

dans lequel au moins une partie de la solution aqueuse d'ammoniac séparée est introduite dans le réacteur SCR pour fournir l'ammoniac pour la réaction SCR ; et

dans lequel le ou les fluides chauds comprenant les gaz de combustion et/ou le gaz craqué.

2. Procédé selon la revendication 1, dans lequel le gaz résiduaire de PSA comprimé est refroidi à une température comprise entre environ 5 °C et environ 60 °C.

3. Procédé selon la revendication 1 ou la revendication 2, dans lequel le gaz résiduaire de PSA comprimé est refroidi par échange de chaleur avec au moins un fluide de refroidissement choisi parmi l'eau, l'ammoniac liquide sous pression ; et le ou les fluides refroidis produits par chauffage de l'ammoniac liquide.

4. Procédé selon l'une quelconque des revendications précédentes, dans lequel de l'eau est ajoutée au premier gaz résiduaire de PSA comprimé.

5. Procédé selon la revendication 4, dans lequel l'eau est réfrigérée à une température inférieure à environ 25 °C avant d'être ajoutée au premier gaz résiduaire de PSA comprimé.

6. Procédé selon l'une quelconque des revendications précédentes, dans lequel l'ammoniac liquide comprend de 0,2 à 0,5 % en poids d'eau.

7. Procédé selon l'une quelconque des revendications précédentes, comprenant le recyclage du gaz résiduaire refroidi et appauvri en ammoniac vers le premier dispositif PSA pour purification avec le gaz craqué ou le gaz appauvri en ammoniac dérivé de ce-dernier.

8. Procédé selon l'une quelconque des revendications 1 à 6, comprenant la purification du gaz résiduaire refroidi et appauvri en ammoniac dans un second dispositif PSA pour produire un second gaz de produit d'hydrogène et un second gaz résiduaire de PSA.

9. Procédé selon la revendication 8, dans lequel le second gaz de produit d'hydrogène est combiné au premier gaz de produit d'hydrogène pour produire un gaz de produit d'hydrogène combiné.

10. Procédé selon l'une quelconque des revendications précédentes, dans lequel le combustible brûlé dans le four comprend un ou plusieurs éléments parmi l'ammoniac, le premier gaz résiduaire de PSA, le second gaz résiduaire de PSA, l'hydrogène, le méthane, le gaz résiduaire refroidi et appauvri en ammoniac, ou un gaz dérivé de ceux-ci.

11. Procédé selon les revendications 8 à 10, dans lequel le combustible brûlé dans le four comprend le second gaz résiduaire de PSA.

12. Procédé selon l'une quelconque des revendications précédentes, dans lequel le catalyseur de réduction sélective comprend au moins un élément parmi l'oxyde de titane, l'oxyde de vanadium, l'oxyde de molybdène, l'oxyde de tungstène ou une zéolite.

13. Procédé selon l'une quelconque des revendications précédentes, dans lequel le premier gaz résiduaire de PSA est comprimé à une pression d'environ 5 à environ 50 bars.

14. Appareil de production d'hydrogène à partir d'ammoniac, comprenant :

une pompe pour pressuriser l'ammoniac liquide afin de produire de l'ammoniac liquide sous pression ;

au moins un premier échangeur de chaleur en communication fluidique avec la pompe pour chauffer (et éventuellement vaporiser) l'ammoniac liquide sous pression provenant de la pompe par échange de chaleur avec un ou plusieurs fluides chauds ;

des tubes de réacteur contenant un catalyseur en communication fluidique avec le ou les premiers échangeurs de chaleur, pour craquer l'ammoniac chauffé provenant du ou des premiers échangeurs de chaleur afin de produire un premier gaz craqué contenant de l'hydrogène gazeux, de l'azote gazeux et de l'ammoniac résiduel ;

un four en communication thermique avec les tubes de réacteur contenant un catalyseur pour la combustion d'un combustible afin de chauffer les tubes de réacteur contenant un catalyseur et de former un gaz de combustion comprenant des oxydes d'azote (NO$_x$) ;

un premier dispositif PSA en communication fluidique avec les tubes de réacteur contenant un catalyseur pour purifier le gaz craqué afin de produire un premier gaz de produit d'hydrogène et un premier gaz résiduaire de PSA ;

un compresseur en communication fluidique avec le premier dispositif PSA pour comprimer au moins une partie du premier gaz résiduaire de PSA afin de produire un gaz résiduaire de PSA comprimé ;

au moins un second échangeur de chaleur en communication fluidique avec le compresseur pour refroidir le gaz résiduaire de PSA comprimé afin de produire un gaz résiduaire refroidi et appauvri en ammoniac et une solution aqueuse d'ammoniac ;

un dispositif de séparation en communication fluidique avec le ou les seconds échangeurs de chaleur pour séparer le gaz résiduaire refroidi et appauvri en ammoniac de la solution aqueuse d'ammoniac ; et

un réacteur de réduction catalytique sélective en communication fluidique avec le four et le dispositif de séparation pour convertir les NO$_x$ en azote gazeux et en eau ;

dans lequel l'appareil comprend une conduite pour alimenter la solution aqueuse d'ammoniac au réacteur SCR ; et

dans lequel l'appareil comprend une conduite de gaz de combustion pour alimenter le gaz de combustion sous la forme d'un fluide chaud du four vers le ou les premiers échangeurs de chaleur et/ou une conduite de gaz craqué pour alimenter le gaz craqué sous la forme d'un fluide chaud des tubes du réacteur contenant le catalyseur vers le ou les premiers échangeurs de chaleur.

15. Appareil selon la revendication 14, comprenant en outre une conduite pour recycler le gaz résiduaire refroidi et appauvri en ammoniac vers le premier dispositif PSA.

16. Appareil selon la revendication 14, comprenant en outre :

un second dispositif PSA en communication fluidique avec le dispositif de séparation pour purifier le gaz résiduaire refroidi et appauvri en ammoniac afin de produire un second produit gazeux d'hydrogène et un second gaz résiduaire de PSA ;

une seconde conduite d'hydrogène gazeux pour éliminer le second hydrogène gazeux du second dispositif PSA ; et

une seconde conduite de gaz résiduaire de PSA pour éliminer le second gaz résiduaire de PSA du second dispositif PSA.

17. Appareil selon l'une quelconque des revendications 14 à 16, comprenant en outre une conduite pour alimenter en eau le dispositif de séparation.

Figure 1

Figure 2

Figure 3

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1142941 A
- US 6835360 A
- GB 977830 A
- JP 5330802 A
- US 2007178034 A
- CN 111957270 A

- US 10787367 B
- US 9381460 B
- US 6379431 B
- US 8778051 B
- US 2601221 A